# EUROPEAN PATENT SPECIFICATION

(11) **EP 1 659 745 B1**
(45) Date of publication and mention of the grant of the patent: **22.09.2010**
(21) Application number: 04292715.2
(22) Date of filing: 17.11.2004
(51) Int. Cl.: H04L 12/56

(54) **Method of scheduling packets in a communications network**
Verfahren zur Planung von Paketen in einem Kommunikationsnetz
Procédé d'ordonnancement de paquets dans un réseau de transmission

(43) Date of publication of application: 24.05.2006
(73) Proprietor: Alcatel Lucent, 75008 Paris (FR)
(72) Inventor: Klotsche, Ralf, 75305 Neuenbürg (DE); Banniza, Thomas-Rolf, 71701 Schwieberdingen (DE)
(74) Representative: Schmidt, Werner Karl

(56) References cited:
- WO-A-02/21769
- WO-A-03/058984
- DE-A- 10 214 115

## Description

The present invention relates to a method of operating a communications network, wherein resources required for transmitting data within said communications network, in particular for transmitting data from a subscriber station to a first base station, are granted depending on a request for said resources.

The present invention further relates to a base station for a communications network, wherein resources required for transmitting data within said communications network, in particular for transmitting data from a subscriber station to said base station are granted depending on a request for said resources.

Scheduling techniques are described in DE 10214115.

Such systems are known from prior art and can inter alia be used to form a so-called multi-hop network architecture which offers the possibility to exchange data between neighbouring radio cells each of which is associated to a base station of the communications network. Since said exchange can be performed by means of a radio frequency (RF) interface provided within said base stations, a backbone connecting the base stations e.g. with optical fiber means or the like is not required.

The major disadvantage of such a wireless multi-hop network architecture based on contemporary systems consists in comparatively large delays which usually amount to a multiple of respective transmit frame units, depending on the system and communications protocol used.

Said delay may i.e. reach tens of milliseconds and thus has a service-degrading influence especially on services such as voice over IP (VoIP) and the like.

Therefore, it is an object of the present invention to provide an improved method of operating a communications network and an improved base station to achieve reduced delays in particular when being operated in multi-hop configurations as compared to prior art systems.

The scope of the invention is defined by the appended independent claims.

Regarding the method of operating a communications network, wherein resources required for transmitting data within said communications network, in particular for transmitting data from a subscriber station to a first base station, are granted depending on a request for said resources, said object is achieved by providing at least one further base station with scheduling information related to said request for said resources.

Resources in the above sense may e.g. be free transmission time frames / time slots, bandwidth, transmission channels and the like.

By using the above mentioned inventive method, it is possible to timely prepare the further base station for a future data transmission. The steps which are necessary in said further base station to prepare a future data transmission like scheduling transmission time frames and the like can thus be performed in parallel to the processing of the request issued by the subscriber station within the first base station, i.e. even before the subscriber station itself performs a data transmission to the first base station.

Therefore, for a subsequent data transmission from the first base station to the further base station in accordance with the multi-hop principle, there are no further delays due to a further grant getting process because at the moment the first base stations initiates the data transmission to the further base station, said further base station is already prepared for said data transmission because it has been able to reserve the corresponding resources in advance to the data transmission.

In difference to the prior art systems, individual delays corresponding to processing requests within a base station do not accumulate when using the inventive method. The delays accumulate in conventional systems due to the fact that resources for transmitting data are scheduled independently for or within each base station, respectively.

Those partly unavoidable delays for processing the requests and for a subsequent reserving and granting of resources are cascaded in a sophisticated way by forwarding the scheduling information to the further base station according to the present invention.

Recursive forwarding is also possible according to the present invention, i.e. upon receiving scheduling information from the first base station, the further base station may, in turn, forward said scheduling information to a base station which is designated as the destination for the next hop within the multi-hop network architecture.

According to an advantageous embodiment of the present invention said request is provided prior to processing said request in said first base station. This variant provides the fastest possible forwarding of the request to further base stations or other network elements.

According to a further advantageous embodiment of the present invention, said scheduling information is provided during or after processing said request in said first base station which enables to provide the further base station(s) with more exact scheduling information since information contained within the request of the subscriber station has been evaluated by the first base station at that stage.

According to another advantageous embodiment of the present invention said scheduling information comprises timing information denoting a specific time and/or time interval at/during which resources of said further base station are to be reserved, in particular for a data transmission originating from said first base station.

The timing information can be used for various purposes within the further base station(s). Firstly, the timing information determines for the further base station(s) when to provide the resources required.

It is possible to use an absolute time format for said timing information such as a time of day or the like. In this case, both base stations must have synchronized system clocks.

A further possibility to represent timing information comprises denoting an open time interval starting at a specific time of day by said timing information which also requires synchronized system clocks.

It is also possible to use the timing information as a differential time value which defines a time interval after which - e.g. upon reception of the timing information within the further base station - the required resources are to be provided.

Secondly, the timing information enables to perform a sophisticated, implicit synchronization of a plurality of base stations without overhead.

According to a further advantageous embodiment of the present invention said scheduling information comprises information on the amount of data to be transmitted which enables an even more precise synchronisation of a multi-hop data transmission.

According to a further very advantageous embodiment of the present invention said scheduling information is optimised based on measured delays. Such measured delays may e.g. comprise the delay between receiving scheduling information or timing information, respectively, and the time of arrival of the transmitted data indicated by the previously received scheduling information. By evaluating said delay, future scheduling information may be corrected depending on the previously measured delay to improve reliability of the inventive method.

A further very advantageous embodiment of the present invention is characterized by using feedback information relating to said scheduling information, wherein said feedback information is issued by said further base station and/or by any other network element of said communications network involved in a data transmission.

Said feedback information may e.g. comprise a measured delay obtained by the further base station as described above. By transmitting said feedback information to the first base station, it is possible to perform a closed-loop control of the multi-hop forwarding process.

According to the present invention, it is also possible to transmit feedback information from further network elements such as a receiving subscriber station and the like to the first base station.

Said transmission of feedback information can also be performed depending on the data transmission. It is, for instance, possible to transmit feedback information only upon errors.

According to a further advantageous embodiment of the present invention a controller for distributing said scheduling information among said base stations and/or other network elements involved in a data transmission is provided.

The controller ensures a proper distribution of the scheduling information and enables to bridge a base station of the multi-hop network architecture which is not capable of performing the inventive method.

Regarding the base station for a communications network, wherein resources required for transmitting data within said communications network, in particular for transmitting data from a subscriber station to said base station, are granted depending on a request for said resources, the object of the present invention is achieved by providing means for providing at least one further base station with scheduling information related to said request for said resources.

According to an advantageous embodiment of the present invention said means for providing at least one further base station with scheduling information comprise a subscriber station.

This is particularly advantageous for use with communication protocols which e.g. do not support a direct communication of two base stations via their radio interfaces. In this case, any data which is to be transmitted from a first base station to a second base station is forwarded from the first base station to a subscriber station reserved for this purpose which, in turn, transmits the data so received in a classic uplink manner to the second base station. This way it is possible to use conventional base stations for implementing the present invention without changing the RF/wireless interface of the base stations to enable an inter-base station communication in an uplink fashion.

The scheduling information may also solely consist of the request for said resources.

Generally, the method according to the present invention is independent of the specific mechanism that is used for the procedure of requesting resources required for data transmissions and for granting these resources.

For instance, the method according to the present invention can be performed together with the following granting mechanisms known from prior art:
UGS (Unsolicited Granting Service), in which a regular pattern of grants is delivered to a subscriber station without an individual request of the subscriber station.
   The UGS is usually employed for fixed bit rate data transmission and/or for connection oriented services like voice services.
RTP (Real Time Polling), wherein a subscriber station is polled frequently and periodically with opportunities to request for grants in a collision free manner. RTP is also well suited for voice services such as voice over IP (VoIP).
NRTP (non-RTP), which resembles RTP but which has a reduced polling rate and a less regular polling pattern. NRTP granting mechanisms optionally provide a support of a minimum bandwidth.
Contention based granting, in which all subscribers compete for access.

The inventive method provides a systematic approach for minimising the delay of multi-hop data transmission and jitter by evaluating feedback information e.g. on an on-demand basis.

Another obvious advantage arising from the application of the inventive method is the minimisation of data and/or packet storage space that has to be provided in the inventive base stations since forwarding delays are significantly reduced by the inventive recursive forwarding of scheduling information.

The inventive method can also be operated so as to focus the possible optimisations to one of the aforedescribed issues of delay minimisation, jitter minimisation and minimisation of data and/or packet storage space.

A further advantage of the present invention is the independence of the inventive method of any underlying standards, e.g. concerning the transmission of data between a subscriber station and a base station and the like.

Though losing some of the benefits of the present invention, an inventive base station comprises full interoperability with prior art base stations. Furthermore, the inventive method is transparent to subscriber stations and does therefore not require any changes of subscriber station hardware or software.

Although the present invention is not limited to a special network communications system or standard, it is well suited for being implemented within networks operating according to IEEE 802.16 family specifications.

Further advantages and features of the present invention are described in the following detailed description with reference to the drawings in which
- Fig. 1: shows a typical scenario employing a first embodiment of the present invention, and
- Fig. 2: shows a message flow according to the embodiment of the present invention referred to in Fig. 1.

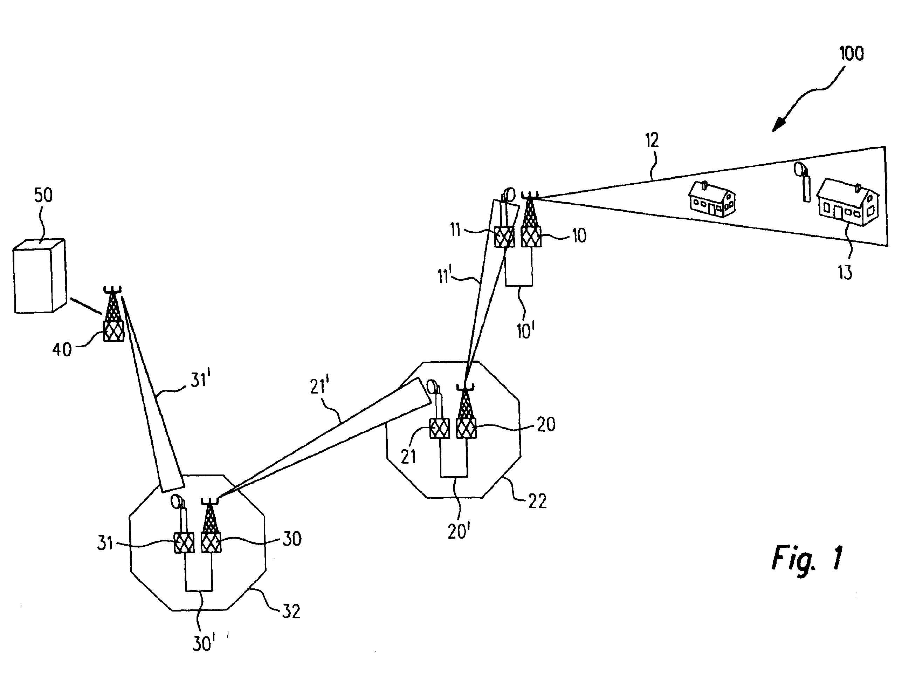

The communications network 100 depicted in Fig. 1 comprises a plurality of base stations 10, 20, 30, 40 each of which defines a radio cell 12, 22, 32 in which wireless data transmission is possible between subscriber stations 13 of the respective radio cell 12 and the corresponding base station 10.

The base stations 10, 20, 30 and 40 are not connected by a backbone e.g. in form of a cable connection or the like which necessitates employing a wireless data transmission in order to exchange data between different base stations 10, 20, 30, 40.

The wireless data transmission of e.g. the first base station 10 to the further base station 20 is realised by means of an RF connection symbolized by the triangle 11'. Said RF connection 11' is maintained from a subscriber station 11 which is assigned to the first base station 10 and connected by the link 10'.

The advantage of using the subscriber station 11 for the mentioned data transmission of the first base station 10 to the further base station 20 is based on the compatibility of this solution with existing network communications standards which do not provide for a direct communication of two base stations 10, 20 in an uplink fashion. However, a typical uplink connection scenario as performed by the subscriber station 11 and the further base station 20 does not cause any problem.

In the same way, wireless data transmissions are performed from the base station 20 to the base station 30 and from the base station 30 to the base station 40. For this purpose, each of the further base stations 20, 30 is assigned a special subscriber station 21, 31 linked to the respective base stations 20, 30 by the links 20', 30' as depicted in Fig. 1.

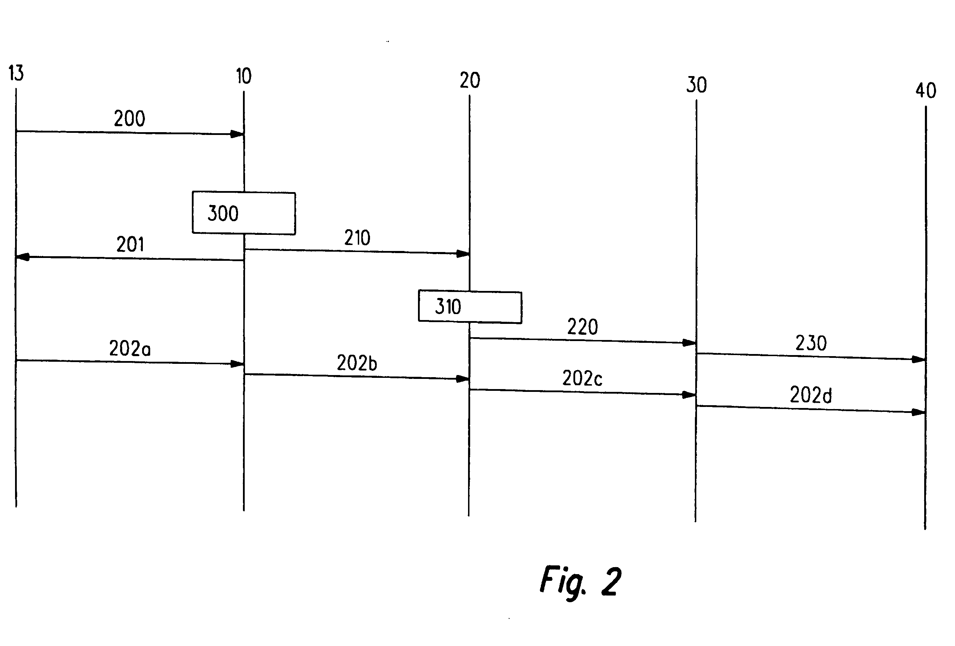

To perform a multi-hop data transmission from the subscriber station 13 to the destination network element 50, the inventive method of recursively requesting resources for data transmission from a neighbour base station is performed, which is described below with reference to Fig. 2, in which the vertical lines denoted with reference numerals 13, 10, 20, 30, 40 represent the respective network element of the communications network 100 of Fig. 1, i.e. the base stations 10, 20, 30, 40 and the subscriber station 13 situated within the radio cell 12 of base station 20.

In order to initiate the multi-hop data transmission, the subscriber station 13 sends a request 200 (Fig. 2) for resources such as transmission time frames or time slots to the first base station 10.

Upon receiving said request 200, the base station 10 processes the request within step 300 of Figure 2. As a result of said processing, transmission time frames or time slots or further resources required for the desired data transmission of subscriber station 13 are reserved by the base station 10 and a corresponding timing information is created.

It is possible to use an absolute time format for said timing information such as a time of day or the like. In this case, any base station included in the multi-hop path is required to have its system clock synchronized with the other base stations.

A further possibility to represent timing information comprises denoting an open time interval starting at a specific time of day by said timing information which also requires synchronized system clocks.

It is also possible to use the timing information as a differential time value which defines a time interval after which - e.g. upon reception of the timing information within the further base station 20 - the required resources are to be provided.

After the step of processing 300, the base station 10 provides the further base station 20, which is the next destination of the multi-hop data transmission, with scheduling information 210 which is related to said request 200 of the subscriber station 13.

The scheduling information 210 comprises information on the request 200 and the timing information previously created in the first base station 10 upon the request 200 and is used within the further base station 20 to reserve corresponding resources for the expected time of arrival of data originating from the subscriber station 13 which is forwarded by the first base station 10 to the further base station 20 according to said timing information.

Subsequent requests 220, 230 (Fig. 2) of the aforedescribed type are subsequently issued from the base station 20 to the base station 30, and from the base station 30 to the base station 40.

This ensures minimal delays in each base station 10, 20, 30, 40 during data transmission, because a reservation of resources and the corresponding granting procedure is performed timely in advance to the data transmission itself so that usually there is no delay as with prior art systems in which each base station individually schedules its resources.

After issuing the scheduling information 210, the base station 10 also issues a grant 201 to the subscriber station 13 thus notifying the subscriber station 13 about the time and further parameters of the data transmission such as reserved resources and the like.

Consequently, after receiving the grant 201 within the subscriber station 13, the data transmission is performed without unnecessary delays in the multi-hop fashion as symbolized by the arrows 202a, 202b, 202c and 202d of Fig. 2.

Finally, upon receiving the transmitted data in base station 40, it is forwarded to the destination network element 50, which itself may be a subscriber station.

According to a further advantageous embodiment of the present invention, the scheduling information is provided to a further base 20 station prior to processing, which enables an even faster propagation of scheduling information along the multi-hop path constituted by the base stations 10, 20, 30, 40.

According to a further advantageous embodiment of the present invention, the scheduling information comprises information on the amount of data to be transmitted. This enables to timely reserve sufficient resources even in case of large amounts of data to be transmitted.

According to another advantageous embodiment of the present invention, it is also possible to optimise the scheduling information or the timing information, respectively, by measuring actual delays within subsequent data transmissions from e.g. one base station 10 to another base station 20 and by correspondingly adapting the scheduling information and/or the timing information.

It is also possible to generate feedback information, which may e.g. be based on the measured delays and which is transmitted from base stations downstream the multi-hop path to base stations upstream the multi-hop path. By enabling the use of feedback information, it is possible to establish a closed-loop control for minimising delays and/or jitter.

Yet another advantageous embodiment of the present invention comprises a controller (not shown) for distributing said scheduling information among the base stations 10, 20, 30, 40. The use of such a controller enables bypassing base stations which do not support the inventive method of transmitting scheduling information to further base stations.

Instead of employing the subscriber stations 11, 21, 31 for transmitting data from their respective base station 10, 20, 30, it is also possible to provide base stations 10, 20, 30, 40 which are capable of directly transmitting data to each other.

## Claims

1. Method of operating a communications network (100),
wherein resources required for transmitting data within said communications network (100), in particular for transmitting data from a subscriber station (13) to a first base station (10), are granted (201) depending on a request (200) for said resources to a first base station (10), **characterized by** providing at least one further base station (20), in particular a next base station of a multi-hop chain of base stations, with scheduling information related to said request (200) for said resources for notifying said at least one further base station (20) of a future data transmission between said first base station (10) and said further base station (20).

2. Method according to claim 1, **characterized by** providing said scheduling information related to said request prior to processing (300) said request in said first base station (10).

3. Method according to claim 1, **characterized by** providing said scheduling information during or after processing (300) said request in said first base station (10).

4. Method according to one of the preceding claims, **characterized in that** said scheduling information comprises timing information denoting a specific time and/or time interval at/during which resources of said further base station (20) are to be reserved, in particular for a data transmission originating from said first base station (10).

5. Method according to one of the preceding claims, **characterized in that** said scheduling information comprises information on the amount of data to be transmitter.

6. Method according to one of the preceding claims, **characterized in that** said scheduling information is optimised based on measured delays.

7. Method according to one of the preceding claims, **characterized by** using feedback information relating to said scheduling information, wherein said feedback information is issued by said further base station (20) and/or by any other network element (50) of said communications network (100) involved in a data transmission.

8. Method according to one of the preceding claims, **characterized by** distributing said scheduling information among said base stations (10, 20) and/or other network elements involved in a data transmission by means of a controller.

9. Method according to claim 8, **characterized in that** said controller bridges a network element that is not capable of evaluating said scheduling information.

10. Base station (10) for a communications network (100),
wherein resources required for transmitting data within said communications network (100), in particular for transmitting data from a subscriber station (13) to said base station (10), are granted (201) depending on a request (200) for said resources to said base station (10), **characterized by** means (11, 21, 31) for providing at least one further base station (20), in particular a next base station of a multi-hop chain of base stations, with scheduling information related to said request (200) for said resources for notifying said at least one further base station (20) of a future data transmission between said base station (10) and said further base station (20).

11. Base station (10) according to claim 10, **characterized in that** said means (11, 21, 31) for providing at least one further base station (20) with scheduling information comprises a subscriber station (11, 21, 31).

## Patentansprüche

1. Verfahren zum Betreiben eines Kommunikationsnetzwerks (100), wobei Ressourcen, die für die Übertragung von Daten innerhalb des besagten Kommunikationsnetzwerks (100), insbesondere für die Übertragung von Daten von einer Teilnehmerstation (13) an eine erste Basisstation (10) erforderlich sind, in Abhängigkeit von einer Anforderung (200) für die besagten Ressourcen an eine erste Basisstation (10) gewährt (201) werden, **dadurch gekennzeichnet, dass** mindestens einer weiteren Basisstation (20), insbesondere einer nächsten Basisstation in einer Multi-Hop-Kette von Basisstationen, die besagte Anforderung (200) für die besagten Ressourcen betreffende Planungsinformationen bereitgestellt werden, um die besagte mindestens eine weitere Basisstation (20) über eine bevorstehende Datenübertragung zwischen der besagten ersten Basisstation (10) und der besagten weiteren Basisstation (20) zu benachrichtigen.

2. Verfahren nach Anspruch 1, **dadurch gekennzeichnet, dass** die besagten die besagte Anforderung betreffenden Planungsinformationen vor der Verarbeitung (300) der besagten Anforderung in der besagten ersten Basisstation (10) bereitgestellt werden.

3. Verfahren nach Anspruch 1, **dadurch gekennzeichnet, dass** die besagten Planungsinformationen während oder nach der Verarbeitung (300) der besagten Anforderung in der besagten ersten Basisstation (10) bereitgestellt werden.

4. Verfahren nach einem der vorstehenden Ansprüche, **dadurch gekennzeichnet, dass** die besagten Planungsinformationen Zeitplanungsinformationen umfassen, welche einen spezifischen Zeitpunkt und/oder Zeitabstand angeben, bei/während welchem Ressourcen der besagten weiteren Basisstation (20) zu reservieren sind, insbesondere für eine von der besagten ersten Basisstation (10) abgehende Datenübertragung.

5. Verfahren nach einem der vorstehenden Ansprüche, **dadurch gekennzeichnet, dass** die besagten Planungsinformationen Informationen über die Menge der zu übertragenden Daten umfassen.

6. Verfahren nach einem der vorstehenden Ansprüche, **dadurch gekennzeichnet, dass** die besagten Planungsinformationen auf der Basis von gemessenen Verzögerungen optimiert werden.

7. Verfahren nach einem der vorstehenden Ansprüche, **dadurch gekennzeichnet, dass** die besagte Planungsinformationen betreffende Feedback-Informationen verwendet werden, wobei die besagten Feedback-Informationen von der besagten weiteren Basisstation (20) und/oder von einem beliebigen anderen in die Datenübertragung verwickelten Netzwerkelement (50) des besagten Kommunikationsnetzwerks (100) ausgegeben werden.

8. Verfahren nach einem der vorstehenden Ansprüche, **dadurch gekennzeichnet, dass** die besagten Planungsinformationen unter den besagten Basisstationen (10, 20) und/oder anderen in eine Datenübertragung verwickelten Netzwerkelementen anhand einer Steuereinrichtung verteilt werden.

9. Verfahren nach Anspruch 8, **dadurch gekennzeichnet, dass** die besagte Steuereinrichtung ein Netzwerkelement, welches nicht fähig ist, die besagten Planungsinformationen zu bewerten, überbrückt.

10. Basisstation (10) für ein Kommunikationsnetzwerk (100), wobei Ressourcen, die für die Übertragung von Daten innerhalb des besagten Kommunikationsnetzwerks (100), insbesondere für die Übertragung von Daten von einer Teilnehmerstation (13) an die besagte Basisstation (10) erforderlich sind, in Abhängigkeit von einer Anforderung (200) für die besagten Ressourcen an die besagte Basisstation (10) gewährt (201) werden, **gekennzeichnet durch** Mittel (11, 21, 31) zum Bereitstellen von die besagte Anforderung (200) für die besagten Ressourcen betreffenden Planungsinformationen an mindestens eine weitere Basisstation (20), insbesondere eine nächste Basisstation in einer Multi-Hop-Kette von Basisstationen, um die besagte mindestens eine weitere Basisstation (20) über eine bevorstehende Datenübertragung zwischen der besagten Basisstation (10) und der besagten weiteren Basisstation (20) zu benachrichtigen.

11. Basisstation (10) nach Anspruch 10, **dadurch gekennzeichnet, dass** die besagten Mittel (11, 21, 31) zum Bereitstellen von Planungsinformationen an mindestens eine weitere Basisstation (20) eine Teilnehmerstation (11, 21, 31) umfassen.

## Revendications

1. Procédé de fonctionnement d'un réseau de communications (100), dans lequel les ressources requises pour transmettre les données dans ledit réseau de communications (100), en particulier pour transmettre les données depuis une station d'abonné (13) à une première station de base (10), sont accordées (201) en fonction d'une requête (200) desdites ressources à une première station de base (10), **caractérisé par** la fourniture à au moins une autre station de base (20), en particulier une station de base suivante d'une chaîne à sauts multiples de stations de base, d'informations de planification relatives à ladite requête (200) desdites ressources pour notifier ladite au moins une autre station de base (20) d'une future transmission de données entre ladite première station de base (10) et ladite autre station de base (20).

2. Procédé selon la revendication 1, **caractérisé par** la fourniture desdites informations de planification relatives à ladite requête avant le traitement (300) de ladite requête dans ladite première station de base (10).

3. Procédé selon la revendication 1, **caractérisé par** la fourniture desdites informations de planification pendant ou après le traitement (300) de ladite requête dans ladite première station de base (10).

4. Procédé selon l'une des revendications précédentes, **caractérisé en ce que** lesdites informations de planification comprennent des informations de synchronisation indiquant une heure et/ou un intervalle temporel spécifique à laquelle/durant lequel les ressources de ladite autre station de base (20) doivent être réservées, en particulier pour une transmission de données provenant de ladite première station de base (10).

5. Procédé selon l'une des revendications précédentes, **caractérisé en ce que** lesdites informations de planification comprennent des informations sur la quantité de données à transmettre.

6. Procédé selon l'une des revendications précédentes, **caractérisé en ce que** lesdites informations de planification sont optimisées sur la base de retards mesurés.

7. Procédé selon l'une des revendications précédentes, **caractérisé par** l'utilisation d'informations de rétroaction relatives auxdites informations de planification, dans lequel lesdites informations de rétroaction sont émises par ladite autre station de base (20) et/ou par un quelconque autre élément de réseau (50) dudit réseau de communications (100) impliqué dans une transmission de données.

8. Procédé selon l'une des revendications précédentes, **caractérisé par** la répartition desdites informations de planification parmi lesdites stations de base (10, 20) et/ou d'autres éléments de réseau impliqués dans une transmission de données, au moyen d'un contrôleur.

9. Procédé selon la revendication 8, **caractérisé en ce que** ledit contrôleur forme un pont avec un élément de réseau qui n'est pas apte à évaluer lesdites informations de planification.

10. Station de base (10) pour un réseau de communications (100), dans lequel les ressources requises pour transmettre les données dans ledit réseau de communications (100), en particulier pour transmettre les données depuis une station d'abonné (13) à ladite station de base (10), sont accordées (201) en fonction d'une requête (200) desdites ressources à ladite station de base (10), **caractérisée par** des moyens (11, 21, 31) pour fournir à au moins une autre station de base (20), en particulier une station de base suivante d'une chaîne à sauts multiples de stations de base, des informations de planification relatives à ladite requête (200) desdites ressources pour notifier ladite au moins une autre station de base (20) d'une future transmission de données entre ladite station de base (10) et ladite autre station de base (20).

11. Station de base (10) selon la revendication 10, **caractérisée en ce que** lesdits moyens (11, 21, 31) pour fournir à au moins une autre station de base (20) les informations de planification comprennent une station d'abonné (11, 21, 31).
